# EUROPEAN PATENT SPECIFICATION

(11) **EP 2 345 547 B1**
(45) Date of publication and mention of the grant of the patent: **03.06.2015**
(21) Application number: 09824714.1
(22) Date of filing: 23.10.2009
(51) Int. Cl.: B60C 5/14, B60C 15/06

(54) **PNEUMATIC TIRE**
LUFTREIFEN
BANDAGE PNEUMATIQUE

(30) Priority: 10.11.2008 JP 2008287385
(43) Date of publication of application: 20.07.2011
(73) Proprietor: The Yokohama Rubber Co., Ltd., Tokyo 105-8685 (JP)
(72) Inventor: MATSUDA, Jun, Hiratsuka-shi Kanagawa 254-8601 (JP); HASHIMURA, Yoshiaki, Hiratsuka-shi Kanagawa 254-8601 (JP)
(74) Representative: Hoffmann Eitle
(86) International application number: PCT/JP2009/068254
(87) International publication number: WO 2010/053014

(56) References cited:
- EP-A1- 1 859 959
- WO-A1-2007/050236
- JP-A- 59 120 501
- JP-A- 2005 096 621
- JP-A- 2006 256 557
- US-A1- 2007 209 744

## Description

### TECHNICAL FIELD

The present invention relates to a pneumatic tire including an inner liner layer formed of a thermoplastic resin or a thermoplastic elastomer composition containing a blend of a thermoplastic resin and an elastomer. More specifically, the present invention relates to a pneumatic tire which is free from air inclusion in bead parts and thus prevents curing failure attributable to the air inclusion.

### BACKGROUND ART

Recently, it is proposed that a film layer formed of a thermoplastic resin or a thermoplastic elastomer composition containing a blend of a thermoplastic resin and an elastomer be disposed as an inner liner layer on a tire inner surface.

In such a pneumatic tire, a carcass layer is laid between a pair of bead parts. An inner liner layer is disposed at a tire cavity side of the carcass layer. A tie rubber layer is interposed between the carcass layer and the inner liner layer to improve the adhesiveness between the two. Moreover, when chafers are provided to protect the respective bead parts, an end portion, on a tire cavity side, of each chafer is inserted between the carcass layer and the inner liner layer (see, for example, Patent Document 1).

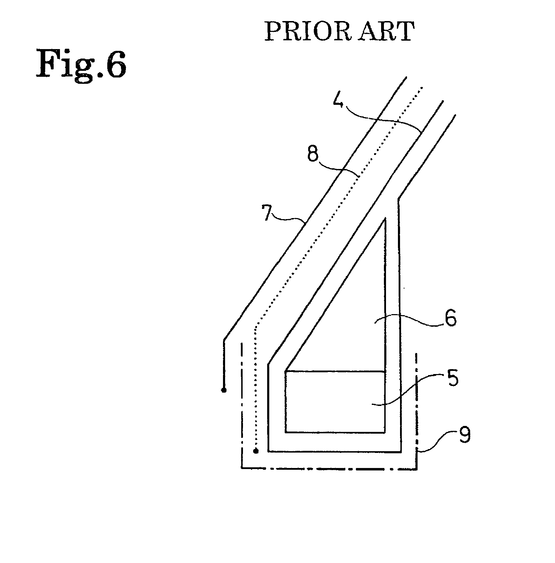

Fig. 6 is a cross-sectional view schematically showing a bead part in a conventional pneumatic tire. As shown in Fig. 6, a carcass layer 4 is wound up to wrap a bead core 5 and a bead filler 6. An inner liner layer 7 is disposed at a tire cavity side of the carcass layer 4. A tie rubber layer 8 is disposed between the carcass layer 4 and the inner liner layer 7. Additionally, an end portion, on a tire cavity side, of a chafer 9 for protecting the bead part is disposed between the inner liner layer 7 and the tie rubber layer 8.

However, when the end portion, on the tire cavity side, of the chafer 9 is disposed between the inner liner layer 7 and the tie rubber layer 8, a step formed on the basis of the thickness of the chafer 9 is likely to form air inclusion at a spot between the inner liner layer 7 and the tie rubber layer 8 in the bead part. If the air inclusion is present in the bead part in a high-temperature tire removed from the mold after curing, the inner liner layer 7 with a matrix of a thermoplastic resin expands in the air inclusion portion. This brings about a problem of curing failure.

### PRIOR ART DOCUMENT

### PATENT DOCUMENT

Patent Document 1: Japanese patent application *Kokai* publication No. Hei 10-81108

WO 2007/050236 A1 refers to a vulcanizable layered composition comprising at least two layers and at least one tie layer, wherein the first layer of the two layers comprises a fluid permeation prevention layer, the second layer of the two layers comprises at least one high diene rubber, and the tie layer comprises a mixture of about 50 to 100 weight % of at least one halogenated isobutylene containing elastomer, about 0-50 weight % of at least one high diene elastomer, about 20-50 weight % of at least one filler, about 0-30 weight % of at least one processing oil, about 1-20 parts per hundred of at least tackifier and at least about 0.2-15 parts per hundred of rubber of a curing system for the elastomers.

US 2007-0209744 A1 refers to a pneumatic tire containing oxygen absorbent, wherein a pneumatic tire is composed of a pair of left and right beads, a pair of left and right side walls connected to these beads and a tread arranged between the above side walls. Between the pair of left and right beads, a carcass layer of a single layer or multiple layers of two layers or more is provided. At the trad portion, a belt layer is arranged so as to surround the outer circumferential thereof.

EP 1 859 959 A1 refers to a heavy-load tire according to the preamble of claim 1 comprising a rubber chafer, an inner liner layer and a two rubber layer.

### SUMMARY OF THE INVENTION

### PROBLEM TO BE SOLVED BY THE INVENTION

An object of the present invention is to provide a pneumatic tire: which has an inner liner layer formed of a thermoplastic resin or a thermoplastic elastomer composition containing a blend of a thermoplastic resin and an elastomer; and which, despite of this, is free from air inclusion in bead parts and is capable of preventing curing failure attributable to the air inclusion.

### MEANS FOR SOLVING THE PROBLEM

A pneumatic tire of the present invention to accomplish the above object is a pneumatic tire including the features of independent claim 1. Further preferred embodiments are mentioned in the dependent claims.

### EFFECTS OF THE INVENTION

In the present invention, a pneumatic tire has an end portion, on a tire cavity side, of each chafer for protecting a corresponding bead part being inserted between a carcass layer and an inner liner layer. When the inner liner layer is formed of a thermoplastic resin or a thermoplastic elastomer composition, a tie rubber layer is disposed between the inner liner layer and the chafer. Thereby, air inclusion is prevented from being generated between the inner liner layer and the tie rubber layer in the bead part. Thus, the tire is capable of preventing curing failure attributable to the air inclusion.

In the present invention, the position of each lower end of the inner liner layer is preferably located outward of a corresponding bead toe in a tire radial direction. This is because of the following reason. An inner liner layer with a matrix of a thermoplastic resin has a higher rigidity than that formed of a butyl rubber. As a result, if the inner liner layer has such a dimension that the inner liner layer extends beyond the bead toe, a wrinkle is formed in the inner liner layer when a carcass layer is wound up around a bead core in building a tire. Meanwhile, the position of each lower end of the inner liner layer is preferably located within a region not more than 35% of a cross-sectional height of the tire. By this, the air permeation preventive function can be sufficiently demonstrated.

The position of each lower end of the tie rubber layer is preferably located at the same level as the position of the corresponding lower end of the inner liner layer, or located inward thereof in the tire radial direction. This makes it possible to more surely avoid air inclusion. In addition, a height hₜ measured in the tire radial direction from each bead toe to the position of the corresponding lower end of the tie rubber layer and a height h_{b} measured in the tire radial direction from the bead toe to the position of an innermost diameter of the corresponding bead core preferably have a relationship of hₜ ≥ h_{b}/2. This is because of the following reason. If a tie rubber layer generally not blended with an antioxidant is present in the vicinity of the bead toe without being covered with an inner liner layer, the physical properties of this portion are deteriorated through ozone degradation or the like. Thereby, the bead toe is easy to crack when the tire is fitted onto or removed from a rim. By satisfying the relationship of hₜ ≥ h_{b}/2, it is possible to prevent the bead toe from cracking when the tire is fitted onto or removed from the rim. Furthermore, in order to prevent the bead toe from cracking when the tire is fitted onto or removed from the rim, it is effective to blend a rubber composition forming the tie rubber layer and an antioxidant.

### BRIEF DESCRIPTION OF THE DRAWINGS

[Fig. 1] Fig. 1 is a meridian half cross-sectional view showing a pneumatic tire according to an embodiment of the present invention.
[Fig. 2] Fig. 2 is a cross-sectional view schematically showing a bead part in the pneumatic tire of Fig. 1.
[Fig. 3] Fig. 3 is a cross-sectional view schematically showing a modified example of the bead part in the pneumatic tire of the present invention.
[Fig. 4] Fig. 4 is a cross-sectional view schematically showing another modified example of the bead part in the pneumatic tire.
[Fig. 5] Fig. 5 is a cross-sectional view schematically showing yet another modified example of the bead part in the pneumatic tire of the present invention.
[Fig. 6] Fig. 6 is a cross-sectional view schematically showing a bead part in a conventional pneumatic tire.

### MODES FOR CARRYING OUT THE INVENTION

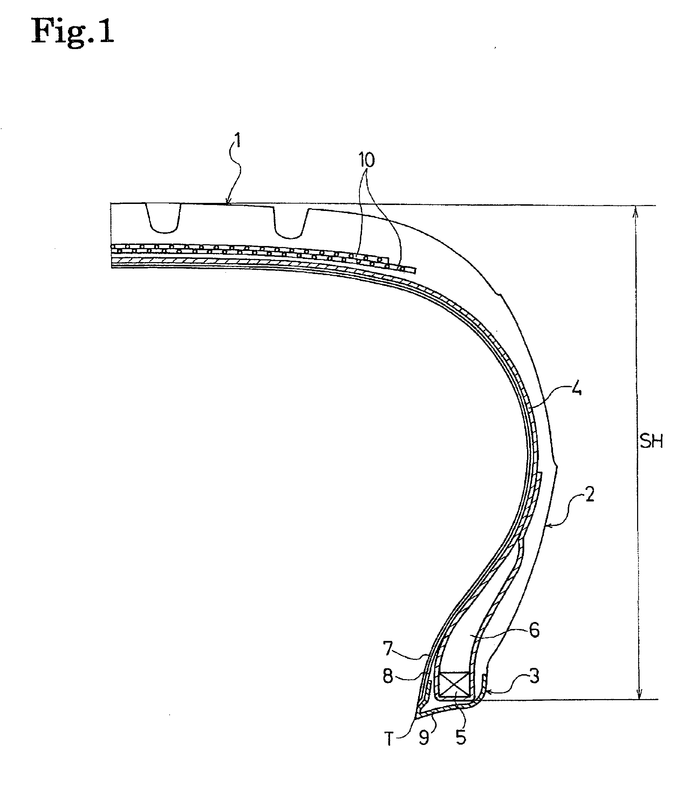

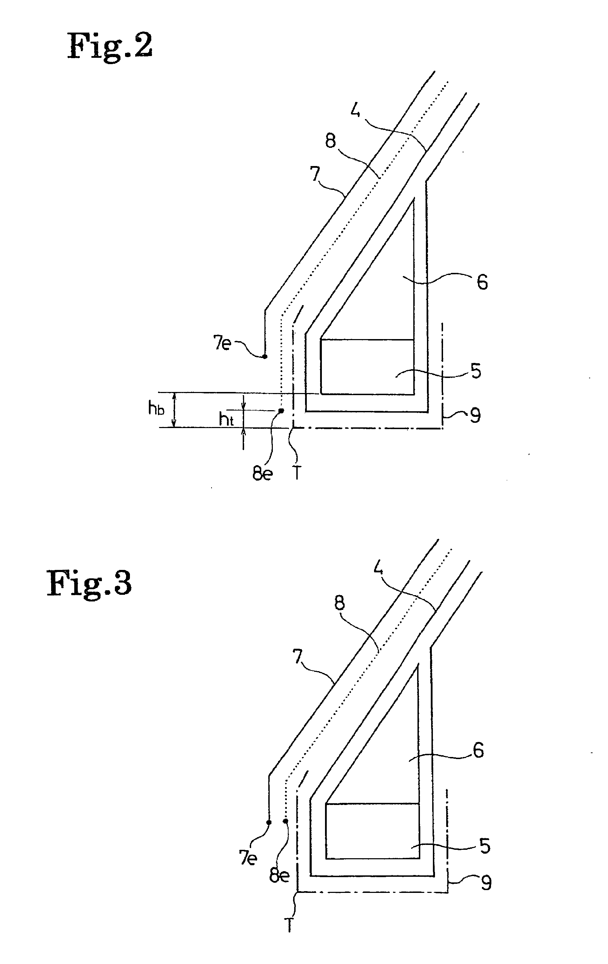

Hereinafter, a constitution of the present invention will be described in detail with reference to the attached drawings. Fig. 1 shows a pneumatic tire according to an embodiment of the present invention. Fig. 2 schematically shows a bead part of the pneumatic tire in Fig. 1.

In Fig. 1, reference numeral 1 denotes a tread part, reference numeral 2 denotes a sidewall part, and reference numeral 3 denotes the bead part. A carcass layer 4 is laid between the paired left and right bead parts 3, 3. An end portion of the carcass layer 4 is folded back around a bead core 5 from the inner side of the tire to the outer side thereof. A bead filler 6 disposed on the bead core 5 is wrapped together with the bead core 5 by the carcass layer 4.

An inner liner layer 7 formed of a thermoplastic resin or a thermoplastic elastomer composition is disposed at a tire cavity side of the carcass layer 4 in such a manner that the inner liner layer 7 substantially covers the tire inner surface. Furthermore, a tie rubber layer 8 is interposed between the carcass layer 4 and the inner liner layer 7. Chafers 9 for protecting the respective bead parts 3 are each formed of a sheet member obtained by coating uniformly aligned reinforcing cords or reinforcing fabric with a rubber, a sheet member made of a rubber composition blended with short fibers, a sheet member made of a rubber composition superior in wear resistance to the peripheral rubber members, or the like. The thickness of the chafer 9 is normally set in a range of 0.3 mm to 2.0 mm. The chafer 9 is disposed in a manner to cover an inner periphery side portion of the bead part 3 that comes into contact with a rim seat. An end portion, on a tire cavity side, of the chafer 9 is inserted between the carcass layer 4 and the inner liner layer 7. More specifically, as shown in Fig. 2, a laminated structure is formed in which the tie rubber layer 8 is disposed between the inner liner layer 7 and the chafer 9.

Meanwhile, in the tread part 1, multiple belt layers 10 are buried on an outer peripheral side of the carcass layer 4. These belt layers 10 are disposed in such a manner that: reinforcing cords thereof incline to a tire circumferential direction; and the reinforcing cords of one layer intersect the reinforcing cords of another layer. Furthermore, a belt reinforcing layer formed by continuously winding reinforcing cords in the tire circumferential direction may be disposed on an outer peripheral side of the belt layers 10.

In the pneumatic tire, the end portion, on the tire cavity side, of the chafer 9 for protecting the corresponding bead part 3 is inserted between the carcass layer 4 and the inner liner layer 7. Moreover, when the inner liner layer 7 is formed of the thermoplastic resin or the thermoplastic elastomer composition, the tie rubber layer 8 is disposed between the inner liner layer 7 and the chafer 9. Accordingly, the pneumatic tire prevents air inclusion from being generated between the inner liner layer 7 and the tie rubber layer 8 in the bead part 3. Thus, the tire is capable of preventing curing failure attributable to such air inclusion.

In the pneumatic tire, as shown in Fig. 2, it is desirable that a position 7e of each lower end of the inner liner layer 7 should be located outward of a corresponding bead toe T in a tire radial direction. If the inner liner layer 7 has such a dimension that the position 7e of the lower end of the inner liner layer 7 extends beyond the bead toe T, when the carcass layer 4 is wound up around the bead core 5 in building a tire, a wrinkle may be produced in the inner liner layer 7 which has the matrix of the thermoplastic resin and thereby has a higher rigidity. Meanwhile, it is desirable that the position 7e of the lower end of the inner liner layer 7 should be located within a region not more than 35% of a cross-sectional height SH of the tire. To put it differently, for the reason described above, the position 7e of the lower end of the inner liner layer 7 is desirably located outward of the bead toe T in the tire radial direction. However, if the position 7e of the lower end thereof is located outward of a position, which corresponds to 35% of the cross-sectional height SH of the tire, in the tire radial direction, the air permeation preventive performance based on the inner liner layer 7 is lowered.

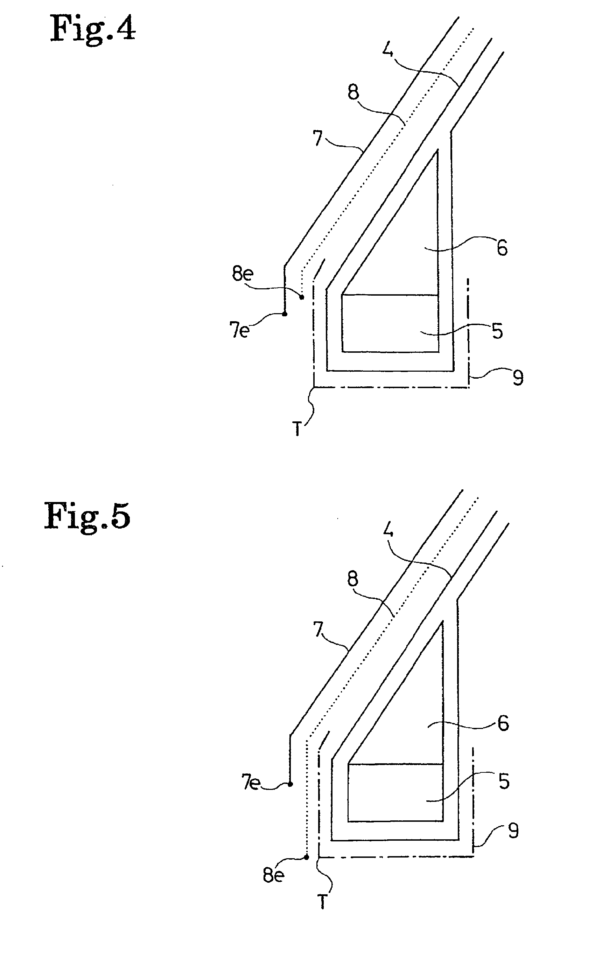

It is desirable that, as shown in Fig. 2, a position 8e of each lower end of the tie rubber layer 8 should be located inward of the position 7e of the corresponding lower end of the inner liner layer 7 in the tire radial direction. This makes it possible to more surely avoid air inclusion. Note that the position 8e of the lower end of the tie rubber layer 8 may be located at the same level as the position 7e of the corresponding lower end of the inner liner layer 7, as shown in Fig. 3. Otherwise, the position 8e of the lower end of the tie rubber layer 8 may be disposed outward of the position 7e of the lower end of the inner liner layer 7 in the tire radial direction, as shown in Fig. 4. Alternatively, as shown in Fig. 5, the position 8e of the lower end of the tie rubber layer 8 may be located at a position outward of the position 7e of the lower end of the inner liner layer 7 in the tire radial direction, the position being at the same level as the bead toe T.

As shown in Fig. 2, it is desirable that a height hₜ measured in the tire radial direction from the bead toe T to the position 8e of the lower end of the tie rubber layer 8 and a height h_{b} measured in the tire radial direction from the bead toe T to the position of an innermost diameter of the corresponding bead core 5 should have a relationship of hₜ ≥ h_{b}/2. Specifically, if the tie rubber layer 8 generally not blended with an antioxidant is present in the vicinity of the bead toe T without being covered with the inner liner layer 7, the physical properties of this portion are deteriorated through ozone degradation or the like. Thereby, the bead toe T is easy to crack when the tire is fitted onto or removed from a rim. However, when the height hₜ is in the aforementioned range to secure a sufficient distance between the bead toe T and the position 8e of the lower end of the tie rubber layer 8, it is possible to prevent the bead toe T from cracking when the tire is fitted onto or removed from the rim.

The pneumatic tire can be obtained, for example, by: disposing a cylindrical inner liner layer around a making drum; bonding thereon tire constituent members such as a tie rubber layer, chafers, a carcass layer, bead cores, bead fillers, and sidewall rubbers to build a primary green tire; bonding thereto belt layers and a tread rubber while expanding the primary green tire in a toroidal shape to build a secondary green tire; and then curing the secondary green tire. Thus, the position 7e of the lower end of the inner liner layer 7 and the position 8e of the lower end of the tie rubber layer 8 can be set arbitrarily based on the width (dimension in a drum axial direction) of each member.

As another approach to prevent the bead toe T from cracking when the tire is fitted onto or removed from the rim, it is effective to blend a rubber composition forming the tie rubber layer 8 with an antioxidant. Examples of such an antioxidant include para-phenylenediamines [for example, N-phenyl-N'-isopropyl-p-phenylenediamine, N-phenyl-N'-(1,3-dimethylbutyl)-p-phenylenediamine, and N,N'-diphenyl-p-phenylenediamine], diphenylamines [for example, alkylated diphenylamine mixtures], amine·ketone reaction products [for example, poly(1,2-dihydro-2,2,4-trimethylquinoline) and 6-ethoxy-1,2-dihydro-2,2,4-trimethylquinoline], imidazoles [for example, 2-mercaptobenzimidazole and 2-mercaptomethylbenzimidazole], monophenols [for example, mono(α-methylbenzyl)phenol, and 2,6-di-t-butyl-4-methylphenol], bisphenols [for example, 2,2'-methylenebis(4-methyl-6-t-butylphenol], special waxes [for example, paraffin waxes], and the like. Additionally, in the rubber composition forming the tie rubber layer 8, the amount of the antioxidant blended with 100 parts by weight of the rubber is desirably 0.5 to 5.0 parts by weight.

Hereinafter, the inner liner layer of the present invention will be described. The inner liner layer can be formed of a thermoplastic resin or a thermoplastic elastomer composition containing a blend of a thermoplastic resin and an elastomer.

Examples of the thermoplastic resin used in the present invention include polyamide resins [for example, nylon 6 (N6), nylon 66 (N66), nylon 46 (N46), nylon 11 (N11), nylon 12 (N12), nylon 610 (N610), nylon 612 (N612), nylon 6/66 copolymers (N6/66), nylon 6/66/610 copolymers (N6/66/610), nylon MXD6, nylon 6T, nylon 6/6T copolymers, nylon 66/PP copolymers, and nylon 66/PPS copolymers], polyester resins [for example, aromatic polyesters such as polybutylene terephthalate (PBT), polyethylene terephthalate (PET), polyethylene isophthalate (PEI), polybutylene terephthalate/tetramethylene glycol copolymers, PET/PEI copolymers, polyarylate (PAR), polybutylene naphthalate (PBN), liquid crystal polyesters, and polyoxyalkylene diimide diacid/polybutylene terephthalate copolymers], polynitrile resins [for example, polyacrylonitrile (PAN), polymethacrylonitrile, acrylonitrile/styrene copolymers (AS), methacrylonitrile/styrene copolymers, and methacrylonitrile/styrene/butadiene copolymers], poly(meth)acrylate resins [for example, polymethyl methacrylate (PMMA), polyethyl methacrylate, ethylene-ethyl acrylate copolymers (EEA), ethylene-acrylic acid copolymers (EAA), and ethylene methylacrylate resins (EMA)], polyvinyl resins [for example, vinyl acetate (EVA), polyvinyl alcohol (PVA), vinyl alcohol/ethylene copolymers (EVOH), polyvinylidene chloride (PVDC), polyvinyl chloride (PVC), vinyl chloride/vinylidene chloride copolymers, and vinylidene chloride/methylacrylate copolymers], cellulose resins [for example, cellulose acetate and cellulose acetate butyrate], fluororesins [for example, polyvinylidene fluoride (PVDF), polyvinyl fluoride (PVF), polychlorofluoroethylene (PCTFE), and ethylene/tetrafluoroethylene copolymers (ETFE)], imide resins [for example, aromatic polyimide (PI)], and the like.

Examples of the elastomer used in the present invention include diene rubbers and their hydrogenated products [for example, NR, IR, epoxidized natural rubbers, SBR, BR (high-cis BR and low-cis BR), NBR, hydrogenated NBR, and hydrogenated SBR], olefin rubbers [for example, ethylene propylene rubbers (EPDM, EPM), and maleic acid-modified ethylene propylene rubbers (M-EPM)], butyl rubber (IIR), copolymers of isobutylene and aromatic vinyl or diene monomer, acrylic rubbers (ACM), ionomers, halogen-containing rubbers [for example, Br-IIR, Cl-IIR, brominated isobutylene-p-methylstyrene copolymers (Br-IPMS), chloroprene rubbers (CR), hydrin rubbers (CHC, CHR), chlorosulfonated polyethylene (CSM), chlorinated polyethylene (CM), and maleic acid-modified chlorinated polyethylene (M-CM)], silicone rubbers (for example, methyl vinyl silicone rubbers, dimethyl silicone rubbers, and methylphenylvinyl silicone rubbers), sulfur-containing rubbers (for example, polysulfide rubbers), fluororubbers (for example, vinylidene fluoride rubbers, fluorine-containing vinyl ether rubbers, tetrafluoroethylene-propylene rubbers, fluorine-containing silicone rubbers, and fluorine-containing phosphazene rubbers), thermoplastic elastomers (for example, styrene elastomers, olefin elastomers, polyester elastomers, urethane elastomers, and polyamide elastomers), and the like.

In the thermoplastic elastomer composition used in the present invention, the component ratio of a thermoplastic resin component (A) to an elastomer component (B) may be appropriately set based on the balance between the thickness and the flexibility of the film layer. However, the preferable range is 10/90 to 90/10, further preferably 20/80 to 85/15 (in weight ratio).

The thermoplastic elastomer composition according to the present invention can be mixed with another polymer and a compounding agent such as a compatibilizer as a third component in addition to the above-described essential components (A) and (B). The purposes of mixing such a polymer are to improve the compatibility between the thermoplastic resin component and the elastomer component, to improve the film-molding processability of the material, to improve the heat resistance, to reduce cost, and so on. Examples of the material used for the polymer include polyethylene, polypropylene, polystyrene, ABS, SBS, polycarbonate, and the like.

The thermoplastic elastomer composition is obtained by melt-kneading the thermoplastic resin and the elastomer (uncured in the case of rubber) by use of a two-shaft kneading extruder or the like in advance; and dispersing the elastomer component in the thermoplastic resin forming a continuous phase. When the elastomer component is cured, a curing agent may be added during the kneading process to dynamically cure the elastomer. Although various compounding agents (except for the curing agent) may be added to the thermoplastic resin or the elastomer component during the kneading process, it is preferable to premix the compounding agents before the kneading process. The kneader used for kneading the thermoplastic resin and the elastomer is not particularly limited. Examples of the kneader include a screw extruder, a kneader, a banbury mixer, a two-shaft kneading extruder, and the like. Among these, a two-shaft kneading extruder is preferably used for kneading the resin component and the rubber component, and for dynamically kneading the rubber component. Furthermore, two or more types of kneaders may be used to successively knead the components. As the conditions for the melt kneading, it is desirable that the temperature should be equal to or higher than a temperature at which the thermoplastic resin melts. Meanwhile, the shear rate at the time of kneading is preferably 2500 to 7500 sec⁻¹. The overall kneading time is 30 seconds to 10 minutes. When the curing agent is added, the curing time after the addition is preferably 15 seconds to 5 minutes. The thermoplastic elastomer composition produced by the above method is formed into a film by molding with a resin extruder or by calender molding. The film forming method may be a normal method by which the thermoplastic resin or the thermoplastic elastomer is formed into a film.

A thin film of the thermoplastic elastomer composition thus obtained has a structure in which the elastomer is dispersed as a discontinuous phase in the matrix of the thermoplastic resin. By adopting the dispersed structure in such a state, it is possible to set the Young's modulus in a range of 1 to 500 MPa in the standard atmosphere specified by JIS K7100, and to provide an appropriate rigidity as the tire constituent member.

The thermoplastic resin or the thermoplastic elastomer composition can be formed into a sheet or film to be buried in the tire as a single unit. Additionally, an adhesive layer may be stacked thereon to improve the adhesiveness to the adjacent rubber. Specific examples of an adhesive polymer forming the adhesive layer include: ultra-high-molecular-weight polyethylenes (UHMWPE) with a molecular weight of not less than one million, preferably not less than three million; acrylate copolymers, such as ethylene-ethyl acrylate copolymers (EEA), ethylene methyl acrylate resins (EMA), and ethylene acrylic-acid copolymers (EAA), as well as their maleic anhydride adducts; polypropylenes (PP) and their maleic-modified products; ethylene propylene copolymers and their maleic-modified products; polybutadiene resins and their anhydride maleic-modified products; styrene-butadiene-styrene copolymers (SBS); styrene-ethylene-butadiene-styrene copolymers (SEBS); fluoride-based thermoplastic resins; polyether-based thermoplastic resins; and the like. These can be molded into a sheet or film by a conventional method, for instance, by extrusion with a resin extruder. No specific restriction is imposed on the thickness of the adhesive layer. A smaller thickness of the adhesive layer serves better for the purpose of reducing the weight of the tire. It is preferable that the thickness thereof should be 5 µm to 150 µm.

Hereinabove, the preferable embodiment of the present invention has been described in detail. It should be understood, however, that various alterations, substitutions and replacements can be made within the range not departing from the scope of the present invention defined by the attached claims.

### EXAMPLES

Pneumatic tires of Conventional Example and Examples 1 to 5 were prepared as follows. Each tire had a tire size of 225/40R18. Each tire included: a carcass layer laid between a pair of bead parts; an inner liner layer disposed at a tire cavity side of the carcass layer; a tie rubber layer interposed between the carcass layer and the inner liner layer; and chafers protecting the respective bead parts, an end portion on a tire cavity side of each chafer being inserted between the carcass layer and the inner liner layer. The inner liner layer was formed of a thermoplastic elastomer composition containing a blend of a thermoplastic resin (nylon 6,66) and an elastomer (brominated butyl rubber). The arrangement of the tie rubber layer and the chafers was made different among these examples. Note that: the thickness of the inner liner layer was 50 µm; the thickness of the tie rubber layer was 500 µm; and the thickness of the chafers was 0.7 mm.

In the tire of Conventional Example, each chafer was disposed between the tie rubber layer and the inner liner layer, as shown in Fig. 6.

In the tire of Example 1, as shown in Fig. 2, the tie rubber layer was disposed between the inner liner layer and each chafer; and the position of each lower end of the tie rubber layer was located at a position which was inward of the position of the corresponding lower end of the inner liner layer by 4.0 mm in the tire radial direction.

In the tire of Example 2, as shown in Fig. 3, the tie rubber layer was disposed between the inner liner layer and each chafer; and the position of each lower end of the tie rubber layer was located at the same level as was the position of the corresponding lower end of the inner liner layer.

In the tire of Example 3, as shown in Fig. 4, the tie rubber layer was disposed between the inner liner layer and each chafer; and the position of each lower end of the tie rubber layer was located at a position which was outward of the position of the corresponding lower end of the inner liner layer by 4.0 mm in the tire radial direction.

In the tire of Example 4, as shown in Fig. 5, the tie rubber layer was disposed between the inner liner layer and each chafer; and the position of each lower end of the tie rubber layer was located at a position which was inward of the position of the corresponding lower end of the inner liner layer by 7.0 mm in the tire radial direction in order that the position of the lower end of the tie rubber layer coincided with the corresponding bead toe.

In the tire of Example 5, as shown in Fig. 5, the tie rubber layer was disposed between the inner liner layer and each chafer; and the position of each lower end of the tie rubber layer was located at a position which was inward of the position of the corresponding lower end of the inner liner layer by 7.0 mm in the tire radial direction in order that the position of the lower end of the tie rubber layer coincided with the corresponding bead toe. Additionally, the rubber composition forming the tie rubber layer was blended with an antioxidant.

These test tires were each evaluated on the curing failure and the durability of the bead toe by the following testing methods. Table 1 shows the results.

### Curing Failure:

For each of Conventional Example and Examples 1 to 5, 100 test tires were cured, and thereafter the inner surface side of each of the bead parts was visually observed. Thereby, the number of tires in which curing failure had occurred attributable to air inclusion was counted.

### Durability of Bead Toe:

After left in a test room at a temperature of 50°C and with an ozone concentration of 100 pphm for 2 weeks, each test tire was mounted on a wheel having a rim size of 18 × 8J, and was subjected to a 10,000-km running test using a drum testing machine under a condition in which: the tire was inflated with an air pressure of 240 kPa; and the maximum load for this air pressure was applied to the tire. After this running test, the test tire was removed from the rim. The inner surface side of each bead part was visually observed to evaluate the state of the bead toe. The evaluation results were indicated by "A" when the bead toe was not damaged at all, "B" when the bead toe was slightly damaged, and "C" when a large crack(s) was formed in the bead toe.

**[Table 1]**

| | Conventional example | Example 1 | Example 2 | Example 3 | Example 4 | Example 6 |
|---|---|---|---|---|---|---|
| Structure of bead parts | Fig.6 | Fig. 2 | Fig.3 | Fig. 4 | Fig. 5 | Fig. 5 |
| hₜ/h_{b} | 0.7/6.0 =0.12 | 3.0/6.0 =0.50 | 7.0/6.0 =1.17 | 11.0/6.0 =1.83 | 0.0/6.0 =0.00 | 0.0/6.0 =0.0 |
| Antioxidant in tie rubber | Absent | Absent | Absent | Absent | Absent | Present |
| Curing failure | 10 | 0 | 0 | 1 | 0 | 0 |
| Durability of bead toes | A | A | A | A | C | A |

As learned from Table 1, any of the tires of Examples 1 to 5 had significant effects of preventing curing failure attributable to air inclusion in the bead parts in comparison with the tires of Conventional Example. Examples 1 to 3 were favorable in the durability of the bead toe. With regard to Example 4, however, the durability of the bead toe was lowered because the position of each lower end of the tie rubber layer was at the same level as was the corresponding bead toe. Nevertheless, with regard to Example 5 with the same laminated structure as Example 4, the durability of the bead toe was improved because the rubber composition forming the tie rubber layer was blended with the antioxidant.

### EXPLANATION OF REFERENCE NUMERALS

- 1: tread part
- 2: sidewall part
- 3: bead part
- 4: carcass layer
- 5: bead core
- 6: bead filler
- 7: inner liner layer
- 8: tie rubber layer
- 9: chafer
- 10: belt layer

## Claims

1. A pneumatic tire comprising:
a carcass layer (4) laid between a pair of bead parts (3);
an inner liner layer (7) disposed at a tire cavity side of the carcass layer (4);
a tie rubber layer (8) interposed between the carcass layer (4) and the inner liner layer (7); and
chafers (9) for protecting the respective bead parts (3), an end portion on a tire cavity side of each chafer (9) being inserted between the carcass layer (4) and the inner liner layer (7),
wherein the inner liner layer (7) is formed of any one of a thermoplastic resin and a thermoplastic elastomer composition containing a blend of a thermoplastic resin and an elastomer, wherein
the tie rubber layer (8) is disposed between the inner liner layer (7) and each chafer,
a position of each lower end (7e) of the inner liner layer (7) is located outward of a corresponding bead toe (T) in a tire radial direction, and
the position of the lower end (7e) of the inner liner layer (7) is located within a region not more than 35% of a cross-sectional height of the tire, **characterized in that**
a position of each lower end (8e) of the tie rubber layer (8) is located at a same level as is the position of the corresponding lower end (7e) of the inner liner layer (7), or located inward thereof in the tire radial direction,
and a height hₜ measured in the tire radial direction from each bead toe (T) to the position of the corresponding lower end (8e) of the tie rubber layer (8) and a height h_{b} measured in the tire radial direction from the bead toe (T) to a position of an innermost diameter of a corresponding bead core have a relationship of hₜ ≥ h_{b}/2.

2. The pneumatic tire according to claim 1, **characterized in that** a rubber composition forming the tie rubber layer (8) is blended with an antioxidant.

## Patentansprüche

1. Pneumatischer Reifen mit:
einer Karkassenschicht (4), die zwischen ein Paar von Wulstteilen (3) gelegt ist;
einer Innenauskleidungsschicht (7), die auf einer Reifenhohlraumseite der Karkassenschicht (4) angeordnet ist:
einer Verbindungsgummischicht (8), die zwischen der Karkassenschicht (4) und der Innenauskleidungsschicht (7) eingefügt ist; und
Wulstschutzteilen (9) zum Schützen der jeweiligen Wulstteile (3), wobei ein Endabschnitt jedes Wulstschutzteils (9) auf einer Reifenhohlraumseite zwischen der Karkassenschicht (4) und der Innenauskleidungsschicht (7) eingefügt ist,
wobei die Innenauskleidungsschicht (7) aus irgendeinem ausgebildet ist aus thermoplastischem Harz und einer thermoplastischen Elastomerzusammensetzung, die eine Mischung eines thermoplastischen Harzes und eines Elastomers enthält, wobei
die Verbindungsgummischicht (8) zwischen der Innenauskleidungsschicht (7) und jedem Wulstschutzteil angeordnet ist,
eine Position jedes unteren Endes (7e) der Innenauskleidungsschicht (7) in einer Reifenradialrichtung außerhalb eines entsprechenden Wulstzehs (T) angeordnet ist, und
die Position des unteren Endes (7e) der Innenauskleidungsschicht (7) innerhalb einer Bereichs von nicht mehr als 35% einer Querschnittshöhe des Reifens angeordnet ist, **dadurch gekennzeichnet, dass**
eine Position jedes unteren Endes (8e) der Verbindungsgummischicht (8) bei demselben Niveau angeordnet ist wie die Position des entsprechenden unteren Endes (7e) der Innenauskleidungsschicht (7), oder in der Reifenradialrichtung weiter innen davon angeordnet ist,
und eine Höhe hₜ, gemessen in der Reifenradialrichtung, von jedem Wulstzeh (T) zu der Position des entsprechenden unteren Endes (8e) der Verbindungsgummischicht (8) und eine Höhe h_{b}, gemessen in der Reifenradialrichtung, von dem Wulstzeh (T) zu einer Position eines innersten Durchmessers eines entsprechenden Wulstkerns eine Beziehung hₜ ≥ h_{b}/2 erfüllen.

2. Pneumatischer Reifen nach Anspruch 1, **dadurch gekennzeichnet, dass** eine Gummizusammensetzung, welche die Verbindungsgummischicht (8) bildet, mit einem Antioxidans gemischt ist.

## Revendications

1. Bandage pneumatique comprenant :
une couche de carcasse (4) se trouvant entre une paire de parties de talon (3) ;
une couche de calandrage intérieur (7) disposée au niveau d'un côté de cavité de pneu de la couche de carcasse (4) ;
une couche de caoutchouc de liaison (8) interposée entre la couche de carcasse (4) et la couche de calandrage intérieur (7) ; et
des bandelettes-talons (9) pour protéger les parties de talon respectives (3), une partie d'extrémité sur un côté de cavité de pneu de chaque bandelette-talon (9) étant insérée entre la couche de carcasse (4) et la couche de calandrage intérieur (7),
dans lequel la couche de calandrage intérieur (7) est formée de l'une quelconque parmi une résine thermoplastique et une composition élastomère thermoplastique contenant un mélange d'une résine thermoplastique et d'un élastomère, dans lequel
la couche de caoutchouc de liaison (8) est disposée entre la couche de calandrage intérieur (7) et chaque bandelette-talon,
une position de chaque extrémité inférieure (7e) de la couche de calandrage intérieur (7) est située vers l'extérieur d'une pointe de talon correspondante (T) dans une direction radiale de pneu, et
la position de l'extrémité inférieure (7e) de la couche de calandrage intérieur (7) est située dans une région ne dépassant pas 35% d'une hauteur de section transversale du pneu, **caractérisé en ce que**
une position de chaque extrémité inférieure (8e) de la couche de caoutchouc de liaison (8) est située à un même niveau que la position de l'extrémité inférieure correspondante (7e) de la couche de calandrage intérieur (7), ou située vers l'intérieur de celle-ci dans la direction radiale de pneu,
et une hauteur hₜ mesurée dans la direction radiale de pneu depuis chaque pointe de talon (T) jusqu'à la position de l'extrémité inférieure correspondante (8e) de la couche de caoutchouc de liaison (8) et une hauteur h_{b} mesurée dans la direction radiale de pneu depuis la pointe de talon (T) jusqu'à une position d'un diamètre le plus interne d'une tringle correspondante ont une relation hₜ ≥ h_{b}/2.

2. Bandage pneumatique selon la revendication 1, **caractérisé en ce qu'**une composition de caoutchouc formant la couche de caoutchouc de liaison (8) est mélangé avec un antioxydant.
